# EUROPÄISCHE PATENTSCHRIFT

(11) **EP 0 706 660 B1**
(45) Veröffentlichungstag und Bekanntmachung des Hinweises auf die Patenterteilung: **19.08.1998**
(21) Anmeldenummer: 94916900.7
(22) Anmeldetag: 09.06.1994
(51) Int. Cl.: G01P 5/00, G01P 13/02

(54) **VERFAHREN UND VORRICHTUNG ZUR ERZEUGUNG EINER GRAPHISCHEN ECHTZEIT-RICHTUNGSINFORMATION FÜR DETEKTIERTE OBJEKTSPUREN**
PROCESS AND DEVICE FOR GENERATING GRAPHIC REAL-TIME DIRECTIONAL INFORMATION FOR DETECTED OBJECT TRACKS
PROCEDE ET DISPOSITIF PERMETTANT DE PRODUIRE UNE INFORMATION DIRECTIONNELLE GRAPHIQUE EN TEMPS REEL POUR DES TRACES D'OBJETS DETECTEES

(30) Priorität: 01.07.1993 DE 4321876
(43) Veröffentlichungstag der Anmeldung: 17.04.1996
(73) Patentinhaber: Ruck, Bodo, Dr.-Ing., 76228 Karlsruhe (DE)
(72) Erfinder: RUCK, Bodo, D-76227 Karlsruhe (DE); KAISER, Andreas, D-76275 Ettlingen (DE)
(74) Vertreter: Zahn, Roland, Dipl.-Ing.
(86) Internationale Anmeldenummer: DE9400653
(87) Internationale Veröffentlichungsnummer: WO9501572

(56) Entgegenhaltungen:
- EP-A- 0 044 730
- DE-A- 2 937 003
- US-A- 4 866 639
- PATENT ABSTRACTS OF JAPAN vol. 6, no. 133 (P-129) (1011) 20. Juli 1982 & JP,A,57 057 265 (MITSUBISHI JUKOGYO K.K.) 6. April 1982

## Beschreibung

Die Erfindung betrifft ein Verfahren zur Bestimmung der Richtung von aufgezeichneten Spuren bewegter Objekte direkt bei der Aufnahme auf einem Bilddetektor. Die detektierten Objektspuren erhalten bei der Aufnahme eine graphische Information in Pfeil- oder Vektorform. Bei den Objekten kann es sich um beleuchtete oder selbstleuchtende Körper unter schiedlicher Größe handeln. Vorstellbar sind beleuchtete Kleinstteilchen wie Moleküle oder Partikeln, die z.B. in einer Strömung mitverfrachtet werden, aber auch größere beleuchtete bewegte Objekte, die auf einem Bilddetektor als Spur abgebildet werden. Voraussetzung für das Verfahren ist somit, daß die Objekte während der Belichtungs- oder Integrationszeit des Bilddetektors Spuren auf dem Detektorelement zeichnen. Charakteristisch für das Verfahren ist, daß die detektierten Objektspuren bei der Aufnahme entweder durch die Veränderung der auf den Bilddetektor eingestrahlten Lichtleistung oder durch die Veränderung der Empfindlichkeit des Bilddetektors mit einer graphischen Richtungsinformation in Pfeil- oder Vektorform versehen werden.

Ähnliche Verfahren und Vorrichtungen, allerdings ohne die der Erfindung zugrunde liegende graphische Richtungserkennung, finden insbesondere in der Strömungs- und Partikelmeßtechnik Anwendung, wo es u.a. darum geht, von detektierten Teilchenspuren auf das Geschwindigkeitsfeld einer Strömung oder Partikelphase in einem ausgeleuchteten Meßraum zu schließen. Die als Tracer eingesetzten Objekte oder Teilchen sind in vielen Fällen so klein, daß sie der Strömung hinreichend genau folgen können. Sie werden i.a. von einer Laserlichtquelle, deren Lichtstrahl zu einer Lichtschnittebene umgeformt wird, beleuchtet [1]. Die Aufnahme der Teilchen mit einer der Geschwindigkeit der Teilchenbewegung angepaßten Belichtungs- oder Integrationszeit führt zu Teilchenspuren auf dem Bilddetektor (z.B. Film, Halbleiter Bildsensor), die das Geschwindigkeitsfeld der Strömung erkennen lassen. Derartige Spuraufnahmen von beleuchteteten oder selbstleuchtenden Partikeln finden sich auch in anderen Objektgrößenbereichen z.B. in der Verfahrenstechnik, wobei es um die Nachverfolgung von größeren Partikeln geht, oder in der Physik, wo Spuren von Kleinstteilchen und Kernbausteinen sichtbar gemacht werden, oder in der Medizintechnik bei der Nachverfolgung der Bewegung von Blutkörperchen.

Eine grobe Unterteilung existierender Meßverfahren zur Erfassung der Partikelbewegung erfolgt danach, ob an einem festen Punkt im Meßraum über einen Zeitraum gemessen wird, oder ob ein ausgedehnter Bereich des Meßraumes zu einem festen Zeitpunkt vermessen wird [2]. Klassifiziert man die Meßverfahren hiernach, so stellt man fest, daß Punktmeßverfahren meistens zeitgemittelte, und Ganzfeldmeßverfahren ("Whole Field Techniques") überwiegend augenblickliche Bewegungsinformationen liefern. Die vorliegende Erfindung gehört in den Bereich der Ganzfeldmeßverfahren, bei denen Objektspuren in einem ganzen Bildfeld (Ausschnitt aus einem Meßraum) zu einem festen Zeitpunkt erfaßt und ausgewertet werden. Für derartige Meßaufgaben kamen bislang insbesondere die Teilchenspuranemometrie [3,4], auch "Particle Tracking Anemometry" (PTA) genannt, sowie die "Laser-Speckle Velocimetry" oder auch "Particle Image Velocimetry" (PIV) genannt [5-8], in Frage. Bei der PTA wird die gesamte bildgebende Spur eines Teilchen aufgenommen, während bei der PIV durch Pulsbetrieb der Beleuchtungsquelle nur der Anfangs- und Endpunkt der Teilchenspur aufgenommen wird. Diesen Verfahren, wie auch den aufzeichnenden holographischen Verfahren gemein ist, daß zwar Objektspuren leicht aufzunehmen sind, allerdings nur hinsichtlich d esBetrages der Geschwindigkeit. Ohne zusätzliche Hilfsmittel kann bei diesen Verfahren aus der aufgenommenen Teilchen- oder Objektspur nicht auf die Richtung der Bewegung geschlossen werden.

In der Teilchenspuranemometrie wurden deshalb von verschiedenen Experimentatoren Kodierungsverfahren entwickelt, die die Richtung einer Objektspur erkennen lassen. Zu nennen sind hier z.B. Verfahren, bei denen durch die Unterbrechung der Beleuchtung eine Art Pulskodierung der Objektspur erzielt wurde, was die Richtung der Bewegung diskretisierte [9]. Eine so erhaltenen Ganzfeldaufnahme muß anschließend sehr zeit- und kostenaufwendig ausgewertet werden, um von einem Bild bestehend aus unterbrochenen Linien zu einem Bild zu gelangen, auf dem die Teilchenspuren mit einer graphischen Richtungsinformation in Pfeil- oder Vektorform vorliegen. Nur in dieser Form sind die Aufnahmen für den Betrachter von Wert, da die graphische Pfeil- oder Vektorform sofort mit der Strömungsrichtung assoziert wird.

Ein weiteres neues Kodierungsverfahren basiert darauf, daß Teilchenspuren mit einem Emfindlichkeitssprung des Detektors aufgenommen werden, um auf diese Weise in den Grauwerten der Bildpixel eine Richtungsinformation festzuhalten. Auch bei diesem Verfahren muß das erhaltene Bild nachträglich aufgearbeitet werden, um Vektorpfeile auf die Teilchenspuren zu zeichnen [10]. Dieses Verfahren ähnelt sehr dem Verfahren nach [11], bei dem das gleiche erzielt wird, allerdings durch die Veränderung der Beleuchtung während der Aufnahme. Sowohl [10], als auch [11] basieren auf der Auswertung von Helligkeitsunterschieden wie sie z.B. in herkömmlichen Photographien auftreten und zu keinerlei meßbaren Veränderung von Objektkonturen führen. Von einer Verbreiterung aufgezeichneter Spuren durch Beleuchtungsunterschiede in irgendeiner Art ist deshalb in [10] und [11] keine Rede. Vielmehr gilt auch bei diesen beiden Verfahren, daß man erst durch eine nachgeschaltete Auswertung zu einem Vektorfeld gelangt.

Allen diesen existierenden PTA-Meß- und Auswerteverfahren gemein ist, daß es bislang nicht gelungen ist, gleich bei der Aufnahme der Spuren eine graphische Information in Pfeil- oder Vektorform dergestalt zu erzeugen, daß die nachgeschaltete zeitintensive Nachbehandlung der Spuraufnahme bis zur Vektorisierung entfällt.

Bei der Particle Image Velocimetry versuchte man die Richtungsinformation ebenfalls durch Kodierungsverfahren zu erhalten. Genannt seien in diesem Zusammenhang Verfahren, bei denen der erste Beleuchtungspuls in einer anderen Farbe erfolgt als der zweite, was bei der Auswertung anhand einer Farbselektion die Richtung der Spur erkennen läßt [12]. Auch bei diesem neuesten Verfahren in der PIV erfolgt die Auswertung der Doppelbelichtungsaufnahmen und die Vektorisierung der Spuren in einem separaten, digitalen Auswerteschritt. Hierbei handelt es sich meist um die digitale Auswertung der zuvor digitalisierten Teilchenspuraufnahmen auf Computern, die allerdings heute noch ca. 20 min. für die Auswertung d.h. Vektorisierung eines Bildes benötigen [13].

Der Erfindung liegt daher die Aufgabe zugrunde, ein Verfahren zu schaffen, das schnell und in einfacher und bequemer Weise eine Vektorisierung eines Bildfeldes mit Objektspuren ermöglicht. Weitere Aufgabe der Erfindung ist es, eine Vorrichtung zur Durchführung des Verfahrens anzugeben.

Die Aufgabe wird durch die im Patentanspruch 1 wiedergegebenen Merkmale gelöst.

Der Lösung dieser Aufgabe liegt die Idee zugrunde, daß während der Aufnahme durch eine geignete Veränderung der detektierten Lichtleistung von bewegten Objekten oder durch eine Empfindlichkeitsveränderung des Bilddetektors, die auf dem Detektor abgebildetete Spur in ihrer Breite verändert werden kann. So kann am Ende einer Spur, d.h. gegen Ende der Aufnahmezeit für ein Bild, eine schlagartige Veränderung der Spurdicke erzeugt werden, die graphisch einer Pfeil- oder Vektorform entspricht. Ausgenutzt wird z.B. bei einer Ausführungsform der Erfindung (Veränderung der Beleuchtung) der Tatbestand, daß unterschiedlich stark leuchtende Punkte (Objekte) gleicher Größe bei der Abbildung durch eine Linse unterschiedlich große Bildpunkte auf der Detektorfläche ergeben. Letzteres hängt u.a. damit zusammen, daß bei hoher Lichtleistung auch noch von der optischen Achse ferne Randstrahlen, die durch die Linse gehen detektierbar werden, diese aber den herkömmlichen Abbildungsfehlern einer Linse oder eines Linsensystems unterliegen, mit der Folge, daß der Bildpunkt bei gleichbleibender Detektorempfindlichkeit vergrößert wird. Der Effekt der Bildpunktverbreiterung kann auch dadurch erzielt werden, daß bei gleichbleibender Beleuchtung der Objektpunkte die Empfindlichkeit des Bilddetektors deutlich heraufgesetzt wird, wodurch die abbildungsfehlerbehafteten Randstrahlen bei der Abbildung detektierbar werden und zu einer Verbreiterung des Bildpunktes führen.

Anstelle der zuvor beschriebenen Maßnahmen kann auch eine Verstellbewegung der Abbildungsoptik erfolgen mit dem Ziel, die Objektspur auf dem Bilddetektor gezielt zu defokussieren und damit zu verbreitern. Die Defokussierung erfolgt hierbei dergestalt, daß ebenfalls die Spur als Pfeil (Vektor) abgebildet wird.

Die vorliegende Erfindung gestattet die Vektorisierung der Teilchenspuren aus einem aufgenommenen Bildfeld direkt bei der Aufnahme. Die Schnelligkeit der Darstellung des Vektorfeldes in einem Strömungsraum ist nicht zu unterbieten, denn sie erfolgt in Echtzeit. Die Anzahl der erfaßten und durch die Erfindung bereits bei der Aufnahme ausgewertetet vorliegenden Bildfelder pro Sekunde wird nur durch das Bilderfassungssystem vorgegeben (z.B. Videonorm) und kann bei der Verwendung von Hochgeschwindigkeitvideosystemen im Bereich von mehreren tausend Bildern pro Sekunde liegen.

Die Erfindung ermöglicht somit die Echtzeit-Vektorisierung von Spuraufnahmen direkt bei der Aufnahme und kann damit leisten, was bisher unmöglich erschien. Die Erfindung kann die beschriebenen Meßaufgaben nicht nur unvergleichbar schneller, sondem auch wesentlich kostengünstiger durchführen als bislang gebräuchliche Ganzfeldmeßverfahren.

Weitere Vorteile und Merkmale der Erfindung ergeben sich aus den Ansprüchen und aus der nachfolgenden Beschreibung, in der Ausführungsbeispiele der Erfindung anhand der Zeichnungen im einzelnen erläutert sind. Dabei zeigt:
- Figur 1: Eine Zeichnung der Erfindung in der die unterschiedlichen Ausführungsformen zusammengefaßt dargestellt werden;
- Figur 2: ein nach einer der Ausführungsformen der Erfindungen erhaltenes Bild von Teilchenspuren mit der erfindungsgemäßen graphischen Richtungsinformation in Pfeil- oder Vektorform;
- Figur 3: eine Ausführungsform der Erfindung, bei der die Lichtleistung des die Objekte beleuchtenden Laserstrahls durch eine mit dem Bilddetektor synchronisierte, optisch aktive Komponente moduliert oder verändert wird;
- Figur 4: eine besondere Ausführungsform der Erfindung gemäß Figur 3, bei der zur Modulation der Leistung des die Objekte beleuchtenden Laserstrahls eine optoakustische Zelle (Braggzelle, Kerrzelle) verwendet wird;
- Figur 5: eine Ausführungsform der Erfindung, bei der durch eine optisch aktive Komponente, die mit dem Bilddetektor synchronisiert ist, die auf den Bilddetektor einfallenden Lichtleistung von den Objekten geeignet moduliert oder verändert wird;
- Figur 6: eine Ausführungsform der Erfindung, bei der die Empfindlichkeit des Bilddetektors während der Aufnahme verändert wird;
- Figur 7: eine Ausführungsform der Erfindung, bei der die Empfangsoptik durch Verstellkomponenten während der Aufnahme bewegt wird;
- Figur 8: eine Ausführungsform der Erfindung, bei der nicht extra beleuchtete und selbstleuchtende Objekte nachverfolgt werden, und die Empfindlichkeit desBilddetektors während der Aufnahme verändert wird.

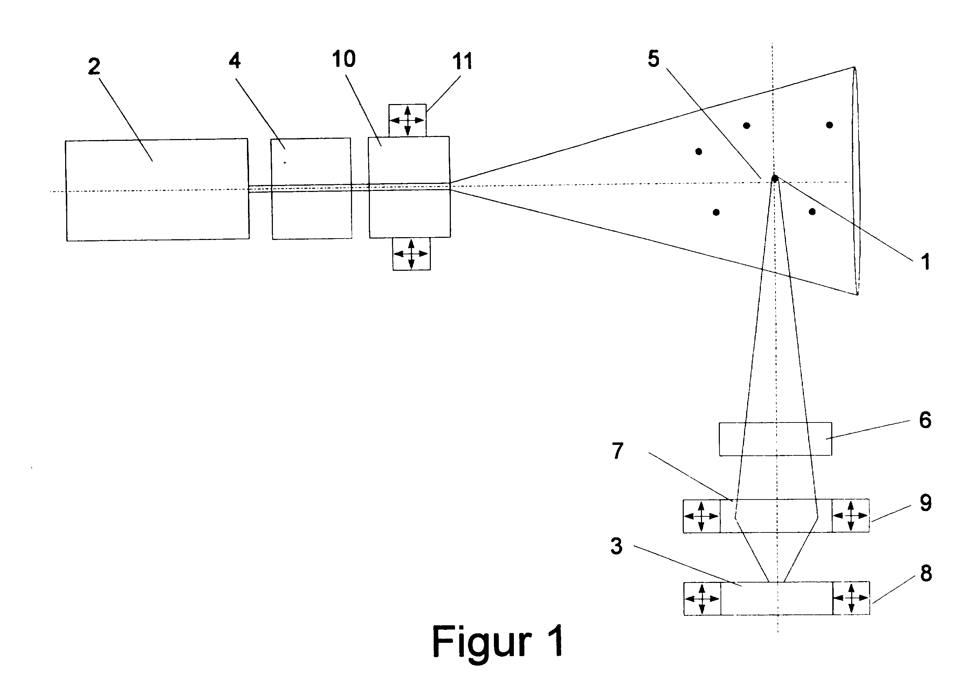

In Figur 1 werden zusammenfassend verschiedene Möglichkeiten der Realisierung der Erfindung in der Skizze dargestellt. Die Erfindung kann z.B. realisiert werden durch die Veränderung der Beleuchtungsleistung der Objekte(1) in einem Lichtschnitt (5), wobei entweder die Laserlichtquelle (2) direkt moduliert wird oder optisch aktive Komponenten (4) die Lichtleistungsmodulation übernehmen. Optisch aktive Komponenten (6) können aber auch empfangsseitig eine Veränderung der detektierten Streulichtleistung bewirken. Ebenso ist eine Ausführung denkbar, bei der entweder die Sendeoptik (10) oder die Empfangsoptik (7) oder der Bilddetektor (3) durch Verstellelemente (11,9,8) während der Aufnahme verfahren bzw. defokussiert wird.

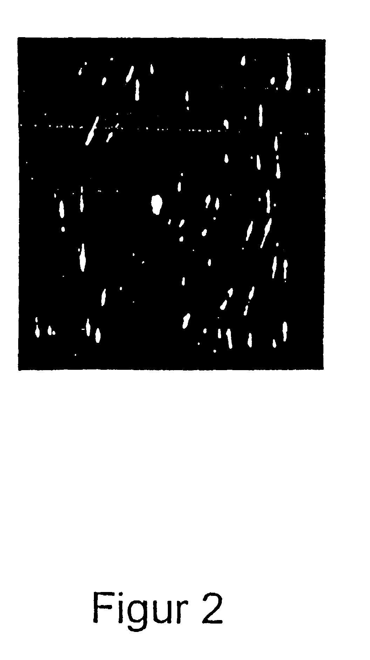

Figur 2 gibt eine typische Spuraufnahme wieder, die mit einer erfindungsgemäßen Ausführungsform erhalten wurde. Die graphische Richtungsinformation wird als Pfeil- oder Vektorform deutlich.

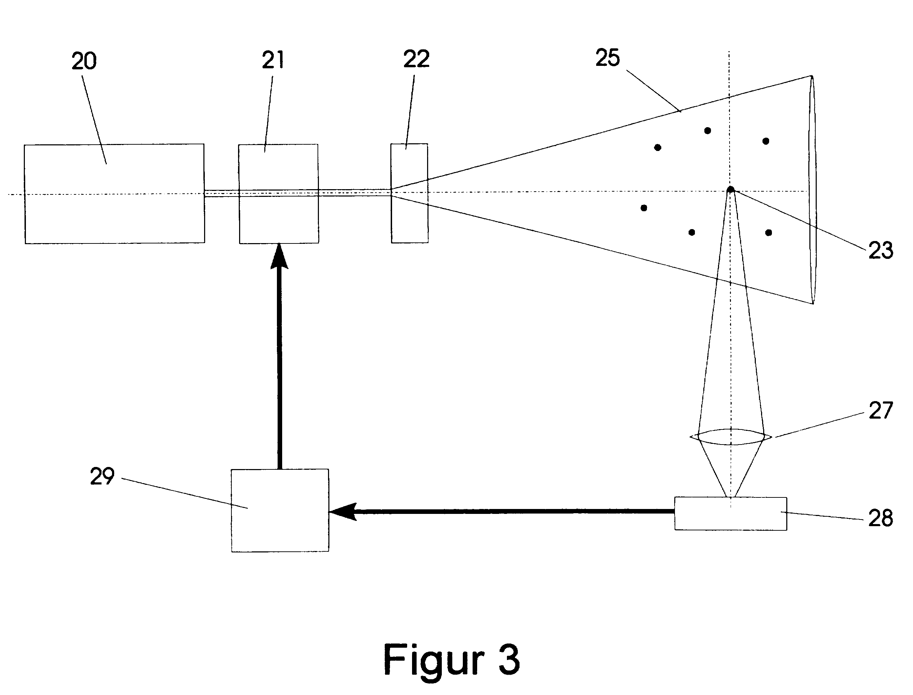

In Figur 3 wird eine Ausführungsform der Erfindung wiedergegeben, bei der der Lichtstrahl (31) eines Lasers (20) durch eine optisch aktive Komponente (21) geführt wird, die die Lichtleistung während der Bildaufnahme verändert. Der Laserstrahl erfährt im Anschluß eine Aufweitung durch eine Sendeoptik (22) und bildet einen Lichtschnitt (25) in dem sich die nachzuverfolgenden Objekte (23) bewegen. Das von den Objekten gestreute Licht wird über eine Linse (27) auf den Bilddetektor (28), der mit der Steuereinheit (29) der optisch aktiven Komponente (21) synchronisiert ist. Durch die Veränderung der Lichtleistung während der Aufnahme werden z.B. am Ende einer Aufnahme die auf dem Bilddetektor aufgezeichneten Spuren dergestalt verbreitert, daß eine graphische Richtungsinformation entsteht.

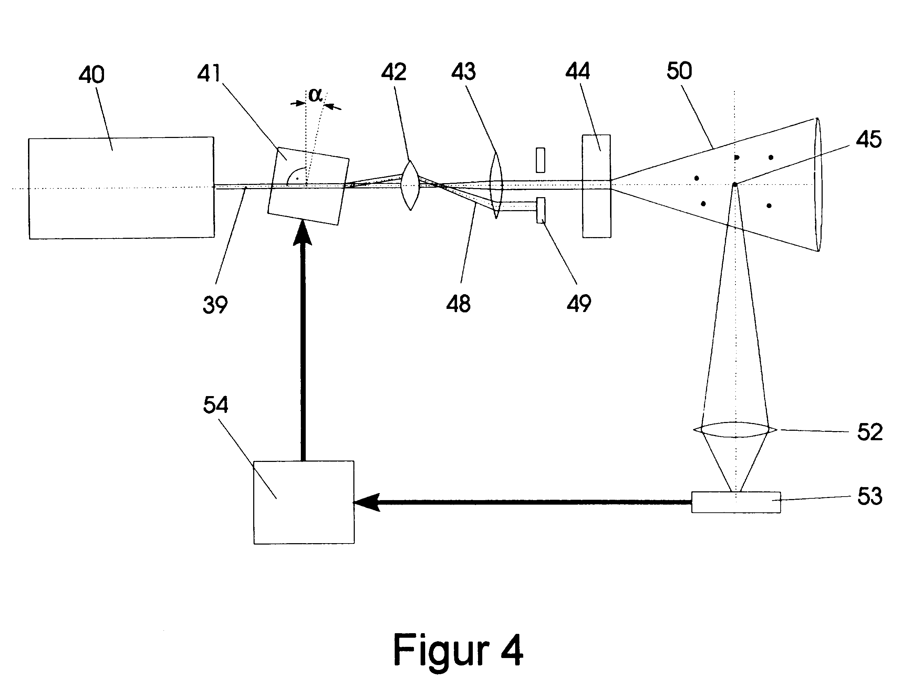

Figur 4 gibt eine besondere Ausführungsform der in Figur 3 gezeigten Anordnung wieder, bei der zur Modulation der beleuchtenden Lichtleistung eine Braggzelle (41) eingesetzt wird. Bei dieser Anordnung wird der Strahl (39) eines Lasers (40) durch eine Braggzelle (41) geführt, die von einer Steuereinheit (54) getrieben wird. Durch geeignete Modulation der Treiberfrequenz wird die Lichtleistung in dem durch eine Sendeoptik (44) erzeugten Lichtschnitt (50) während der Aufnahme verändert. Die durch die Braggzelle (41) erzeugten Strahlen höherer Ordnung (48) werden durch eine geeignete Linsen Blendenanordnung (42,43,49) ausgeblendet. Anschließend wird das von den Objekten (45) ausgehende Licht über eine Linse (52) auf den Bilddetektor (53) abgebildet, der mit der Steuereinheit (54) der Braggzelle (41) synchronisiert ist.

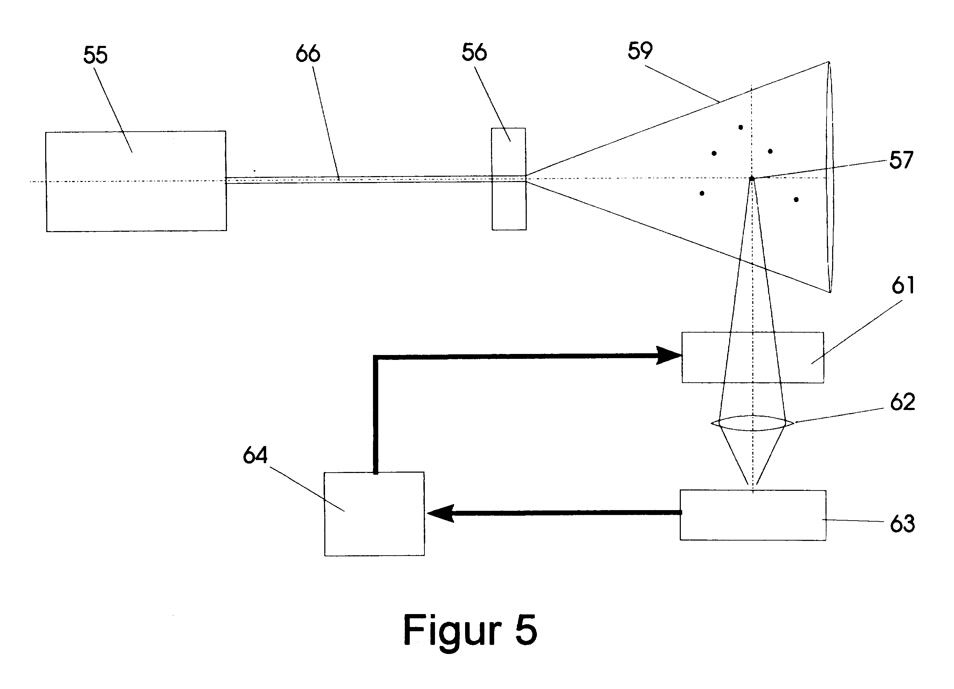

In Figur 5 wird der Lichtstrahl (66) eines Lasers (55) durch eine Sendeoptik (56) zu einer Lichtebene (59) aufgeweitet. Objekte (57) streuen das Licht, das durch eine optisch aktive Komponente (61) und eine Linse (62) auf den Bilddetektor (63) geführt wird. Die optisch aktive Komponente (61) verändert die auf den Bilddetektor (63) während der Aufnahme geführte Lichtleistung und ist mit dem Bilddetektor über eine Steuer- oder Treibereinheit (64) synchronisiert. Durch geeignete Steuerung der auf den Bilddetektor fallenden Lichtmenge wird die Objektspur z.B. am Ende einer Aufnahme auf dem Bilddetektor dergestalt verändert bzw. verbreitert, daß eine graphische Richtungsinformation entsteht.

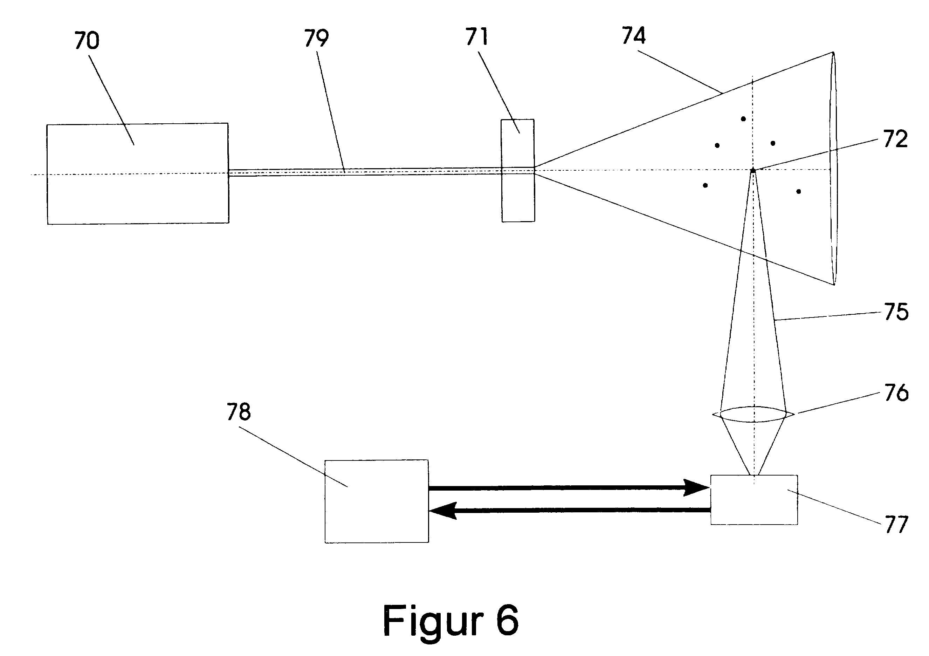

Figur 6 zeigt, daß ein Lichtstrahl (79) eines Lasers (70) durch eine Sendeoptik (71) aufgeweitet wird und eine Lichtebene (74) bildet, in der sich die nachzuverfolgenden Objekte (72) bewegen. Deren Streulicht (75) wird über eine Linse (76) auf den Bilddetektor (77) geführt, dessen Empfindlichkeit während der Aufnahme über eine Steuer- oder Treibereinheit (78) verändert wird. Durch eine Veränderung der Empfindlichkeit z.B. zu Ende der Aufnahme- oder Integrationszeit des Bilddetektors erhalten die Objektspuren die gewünschte graphische Richtungsinformation.

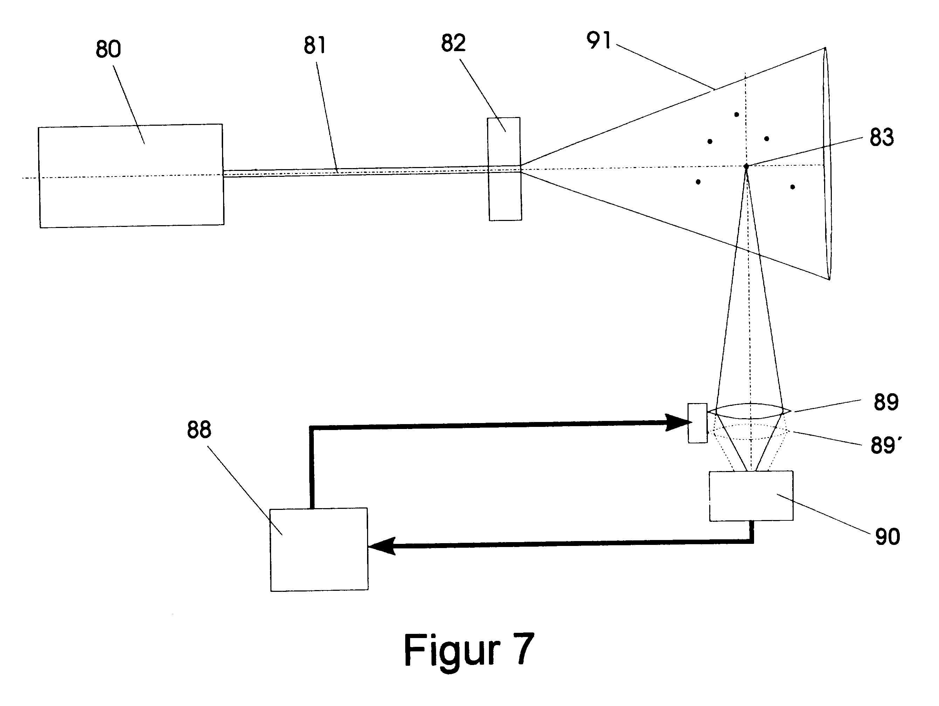

Figur 7 zeigt eine Ausführungsform der Erfindung, bei der der Lichtstrahl (81) eines Lasers (80) durch eine Sendeoptik (82) aufgeweitet wird und einen Lichtschnitt (91) bildet. Objekte (83), die sich im Lichtschnitt bewegen, streuen das Licht, das durch eine Linse (89) auf den Bilddetektor (90) abgebildet wird. Durch Verstellkomponenten (86) wird die Linse (89) während der Aufnahme geeignet verschoben (89'), so daß die aufgezeichnete Objektspur durch die gewollte Defokussierung eine Verbreiterung erfährt, die zur Erzeugung einer Richtungsinformation herangezogen werden kann. Die Verschiebung der Linse (89,89') oder der gesamten Empfangsoptik erfolgt über eine Treiber- oder Steuereinheit, die mit dem Bilddetektor (90) synchronisiert ist.

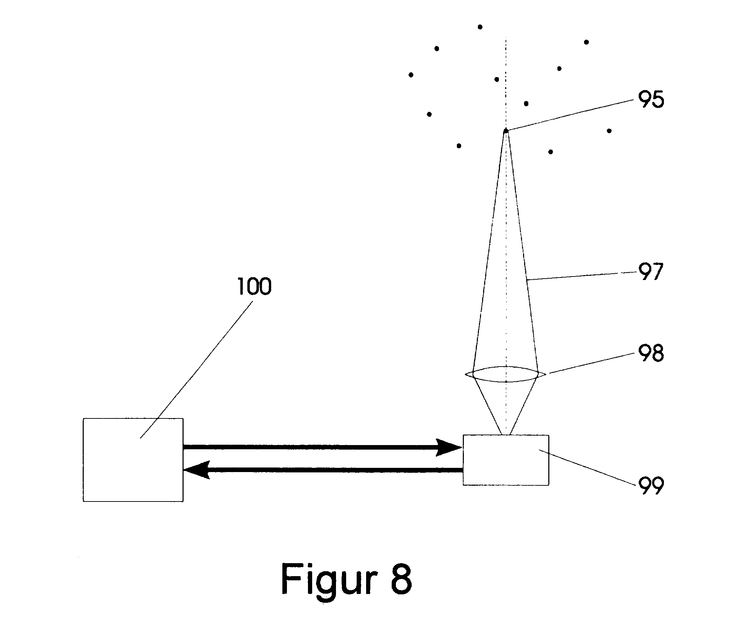

Figur 8 zeigt, daß die Erfindung nicht an die Beleuchtung von Objekten gebunden ist, sondern daß auch die Spuren von selbstleuchtenden Objekte (95) ausgewertet werden können und mit einer graphischen Richtungsinformation in Echtzeit versehen werden können. Das Licht von den Objekten (97) wird über eine Linse (98) auf den Bilddetektor (99) geführt, der während der Aufnahmezeit in seiner Empfindlichkeit z.B. elektronisch über eine Treiber- oder Steuereinheit (100) verändert wird, wodurch die aufgezeichneten Objektspuren verbreitert werden können und eine graphische Richtungsinformation erzeugt werden kann.

### Literatur

- [1]: Ruck, B.(Hrsg.), 1990: "Lasermethoden in der Strömungsmeßtechnik", Fachbuch, AT-Fachverlag Stuttgart, 3, 99-150, ISBN: 3-921 681-01-4
- [2]: Ruck, B., 1993:"Laserlichtschnittverfahren und digitale Bildverarbeitung in der Strömungsmeßtechnik", tm - Technisches Messen, 60, Heft 3/93, pp. 87-98
- [3]: Kasagi, N., Nishino, K., 1990: "Probing Turbulence with Three- Dimensional Particle Tracking Velocimetry", in Engineering Turbulence Modelling and Experiments, Rodi, W., Ganic, E.N. (eds.), Elsevier Science Publ. Co., Inc., 299-314, ISBN: 0-444-01563-9
- [4]: Robinson, O., Rockwell, D., 1992: "Construction of Three- Dimensional Images of Flow Structure via Particle Tracking Techniques", Experiments in Fluids
- [5]: Liu, Z.C., Landreth, C.C., Adrian, R.J., Hanratty, T.J., 1991: "High Resolution Measurement of Turbulent Structure in a Channel with Particle Image Velocimetry", Experiments in Fluids, 10, 301-312
- [6]: Merzkirch, W., 1990: "Laser-Speckle-Velocimetry", in Lasermethoden in der Strömungsmeßtechnik, Ruck, B. (ed.), AT-Fachverlag Stuttgart, 2, 71-97, ISBN: 3-921 681-01-4
- [7]: Willert, C.E., Gharib, M.,1991: "Digital Particle Image Velocimetry", Experiments in Fluids, 10, 181-193
- [8]: Willert, C.E., Gharib, M.,1992: "Three-Dimensional Particle Imaging with a Single Camera", Experiments in Fluids, 12, 353-358
- [9]: Khalighi, B., Yong H. Lee, 1989: "Particle Tracking Velocimetry: An Automatic Image Processing Algorithm", Applied Optics, Vol. 28, No. 20, pp. 4328-4332
- [10]: Wung, T.-S., Tseng, F.-G.,1992: "A Color-Coded Particle Tracking Velocimeter with Application to Natural Convection", Experiments in Fluids 13, pp. 217-223
- [11]: Mitsubishi, J., Shiyouhei, N., 1982: "Method for Measuring Flow Trace Speed", Jap. Patentanmeldung JP A-57-57265, Int. CL3. G01P5/20
- [12]: Cenedese, A., Paglialunga, A., 1989: "A New Technique for the Determination of the Third Velocity Component with PIV", Experiments in Fluids, 8, 228-230
- [13]: Buchhave, P., 1992: "Particle Image Velocimetry-Status and Trends", Experimental Thermal and Fluid Science, 5, pp.586-604

## Patentansprüche

1. Verfahren zur Sichtbarmachung von Richtungs- und Geschwindigkeitsinformationen, die durch eine Abbildung von sich bewegenden Objekten auf einem Bilddetektor bei endlicher Aufnahmezeit entstehen,
dadurch gekennzeichnet,
daß während der Aufnahmezeit der Objekte mindestens einer der Verfahrensparameter der optischen Komponenten des Abbildungssystems so modifiziert wird, daß die Breite der entstehenden Objektspur eine derartige Änderung erfährt, daß sie die Form eines Pfeiles bzw. Vektors annimmt.

2. Verfahren nach Anspruch 1,
wobei die Objekte währen der Aufnahmezeit beleuchtet werden,
dadurch gekennzeichnet,
daß die Modifizierung der Verfahrensparameter in einer Änderung der Beleuchtungsleistung besteht.

3. Verfahren nach einem der vorangegangenen Ansprüche,
dadurch gekennzeichnet,
daß das vom Bilddetektor empfangene Licht, das von den Objekten ausgeht oder reflektiert wird, während der Aufnahmezeit in seiner Leistung zwischen Objekt und Bilddetektor verändert wird.

4. Verfahren nach einem der vorangegangenen Ansprüche,
dadurch gekennzeichnet,
daß während der Aufnahmezeit der Bilddetektor durch Verstellelemente bewegt wird.

5. Verfahren nach einem der vorangegangenen Ansprüche,
dadurch gekennzeichnet,
daß während der Aufnahmezeit eine vor dem Bilddetektor angeordnete Empfangsoptik oder Komponenten der Empfangsoptik durch Verstellelemente bewegt werden.

6. Verfahren nach einem der vorangegangenen Ansprüche,
dadurch gekennzeichnet,
daß während der Aufnahmezeit eine einer Lichtquelle zur Beleuchtung der Objekte nachgeordnete Sendeoptik oder Komponenten der Sendeoptik durch Verstellelemente bewegt werden.

7. Verfahren nach einem der vorangegangenen Ansprüche,
dadurch gekennzeichnet,
daß die Empfindlichkeit des Bilddetektors während der Aufnahmezeit verändert wird.

8. Verfahren nach Anspruch 4 oder 5,
dadurch gekennzeichnet,
daß während der Aufnahmezeit die Sende- oder Empfangsoptik defokussiert wird.

9. Verfahren nach einem der vorangegangenen Ansprüche,
dadurch gekennzeichnet,
daß es sich bei den sich bewegenden Objekten um lichtstreuende oder lichtaussendende Objekte, wie Moleküle oder kleine Partikel handelt.

10. Verfahren nach einem der vorangegangenen Ansprüche,
wobei die Objekte beleuchtet werden,
dadurch gekennzeichnet,
daß zur Beleuchtung der Objekte der Lichtstrahl mindestens eines Lasers oder mindestens einer inkohärenten Lichtquelle verwendet wird.

11. Verfahren nach einem der vorangegangenen Ansprüche,
wobei die Objekte beleuchtet werden,
dadurch gekennzeichent, daß der ausgeleuchtete Meßraum, in dem sich die Objekte befinden, durch eine Lichtscheibe gebildet wird, wozu der Strahl einer Lichtquelle entweder in einer Ebene aufgeweitet wird oder durch Ablenkelemente eine Ebene schnell überstreicht und einen Lichtschnitt bildet.

12. Vorrichtung zur Sichtbarmachung von Richtungs- und
Geschwindigkeitsinformationen an Objektspuren, sowie zur Durchführung des Verfahrens nach einem der vorangegangenen Ansprüche, bestehend aus
- einer oder mehreren Lichtquellen (2, 20, 45, 55, 70, 80) zur Beleuchtung eines Meßraumes, in dem sich Objekte (1, 23, 45, 57, 72, 83, 95) bewegen und/oder
- einer oder mehreren Komponenten (4, 6, 21, 41, 61, 71, 82) im Strahlengang zur Veränderung desselben oder der Lichtleistung und
- mindestens einem Bilddetektor (3, 28, 53, 63, 77, 90, 99), auf dem die Objektspuren durch eine Abbildung sich bewegender Objekte bei endlicher Aufnahmezeit entstehen, wobei die Vorrichtung so ausgebildet ist, daß im Betrieb mindestens einer dieser Bestandteile dergestalt beeinflußt wird, daß dadurch die Objektspuren die Form eines Pfeiles bzw. Vektors aufweisen.

13. Vorrichtung nach Anspruch 12,
dadurch gekennzeichnet,
daß zur Veränderung der Beleuchtungsleistung während der Aufnahmezeit mechanische, elektrische, optische, elektrooptische, akustooptische oder elektronische Komponenten (4) vorgesehen sind.

14. Vorrichtung nach Anspruch 12,
dadurch gekennzeichnet,
daß sie derart ausgebildet ist, daß das von dem mindestens einen Bilddetektor (3) empfangene Licht, das von den Objekten (1) ausgeht, während der Aufnahmezeit von in den Strahlengang zwischen Meßort (5) und Bilddetektor (3) eingebrachten mechanischen, elektrischen, optischen, elektrooptischen, akustooptischen oder elektronischen Komponenten (6) in der Leistung verändert wird.

15. Vorrichtung nach Anspruch 12
dadurch gekennzeichnet,
daß sie derart ausgebildet ist, daß während der Aufnahmezeit der Bilddetektor (3) durch Verstellelemente (8) bewegt wird.

16. Vorrichtung nach Anspruch 12,
mit einer Empfangsoptik zur Abbildung der Objekte,
dadurch gekennzeichnet,
daß sie derart ausgebildet ist, daß die Empfangsoptik (7) oder Komponenten der Empfangsoptik durch Verstellelemente (9) bewegt werden.

17. Vorrichtung nach Anspruch 12,
dadurch gekennzeichnet,
daß sie derart ausgebildet ist, daß eine der Lichtquelle (2) nachgeordnete Sendeoptik (10) oder Komponenten der Sendeoptik durch Verstellelemente (11) bewegt werden.

18. Vorrichtung nach Anspruch 15 oder 16,
dadurch gekennzeichnet,
daß sie derart ausgebildet ist, daß durch die Verstellelemente (9, 11) eine Defokussierung der Sende- (10) oder Empfangsoptik (7) während der Aufnahmezeit erfolgt.

19. Vorrichtung nach Anspruch 12,
dadurch gekennzeichnet,
daß sie derart ausgebildet ist, daß die Empfindlichkeit des Bilddetektors (3) während der Aufnahmezeit verändert wird.

20. Vorrichtung nach Anspruch 12,
dadurch gekennzeichnet,
daß zur Beleuchtung der Objekte ein Laser, oder mindestens eine inkohärente Lichtquelle, vorgesehen ist.

21. Vorrichtung nach Anspruch 12,
dadurch gekennzeichnet,
daß der ausgeleuchtete Meßraum, in dem sich die Objekte bewegen, aus einer Lichtscheibe besteht.

22. Vorrichtung zur Sichtbarmachung von Richtungs- und
Geschwindigkeitsinformationen an Objektspuren, sowie zur Durchführung des Verfahrens nach einem oder mehreren der Ansprüche 1 bis 11,
mit mindestens einem Bilddetektor (3, 28, 53, 63, 77, 90, 99), auf dem die Objektspuren durch eine Abbildung sich bewegender Objekte bei endlicher Aufnahmezeit entstehen, wobei die Vorrichtung derart ausgebildet ist, daß im Betrieb die Empfindlichkeit des Bilddetektors dergestalt beeinflußt wird, daß dadurch die Objektspuren die Form eines Pfeiles bzw. Vektors aufweisen.

## Claims

1. Procedure for visualizing directional and velocity information produced by imaging moving objects on an image detector over a finite recording time, characterized in that, during the object recording time, at least one of the procedural parameters of the optical components of the imaging system is so modified that the width of the object track produced undergoes a change such that it assumes the form of an arrow or vector.

2. Procedure according to Claim 1, in which the objects are illuminated during the recording time, characterized in that the modification of the procedural parameters consists in changing the illuminating power.

3. Procedure according to one of the preceding claims, characterized in that the light received by the image detector, which emanates or is reflected from the objects, is changed in its power between object and image detector during the recording time.

4. Procedure according to one of the preceding claims, characterized in that the image detector is moved by adjusting elements during the recording time.

5. Procedure according to one of the preceding claims, characterized in that receiving optics arranged upstream of the image detector, or components of the receiving optics, are moved by adjusting elements during the recording time.

6. Procedure according to one of the preceding claims, characterized in that transmitting optics arranged downstream of a light source for illuminating the objects, or components of the transmitting optics, are moved by adjusting elements during the recording time.

7. Procedure according to one of the preceding claims, characterized in that the sensitivity of the image detector is changed during the recording time.

8. Procedure according to Claim 4 or 5, characterized in that the transmitting or receiving optics are defocused during the recording time.

9. Procedure according to one of the preceding claims, characterized in that the moving objects are light-scattering or light-emitting objects, such as molecules or small particles.

10. Procedure according to one of the preceding claims, in which the objects are illuminated, characterized in that use is made of the light beam of at least one laser or of at least one incoherent light source to illuminate the objects.

11. Procedure according to one of the preceding claims, in which the objects are illuminated, characterized in that the illuminated measuring space in which the objects are located is formed by a light plate, for which purpose the beam of a light source is either diverged in a plane or rapidly sweeps across a plane as a result of deflecting elements and forms a light section.

12. Apparatus for visualizing directional and velocity information on object tracks, and also for implementing the procedure according to one of the preceding claims, comprising
- one or more light sources (2, 20, 45 [sic], 55, 70, 80) for illuminating a measuring space in which objects (1, 23, 45, 57, 72, 83, 95) are moving and/or
- one or more components (4, 6, 21, 41, 61, 71, 82) in the beam path for changing the same or the luminous power and
- at least one image detector (3, 28, 53, 63, 77, 90, 99), on which the object tracks are produced by imaging moving objects over a finite recording time, the apparatus being so designed that in operation at least one of these elements is influenced in such a manner that the object tracks thereby have the form of an arrow or vector.

13. Apparatus according to Claim 12, characterized in that mechanical, electrical, optical, electro-optical, acousto-optical or electronic components (4) are provided for changing the illuminating power during the recording time.

14. Apparatus according to Claim 12, characterized in that it is designed in such a way that the light received by the at least one image detector (3), which emanates from the objects (1), is changed in power during the recording time by mechanical, electrical, optical, electro-optical, acousto-optical or electronic components (6) put into the beam path between measuring point (5) and image detector (3).

15. Apparatus according to Claim 12, characterized in that it is designed in such a way that the image detector (3) is moved by adjusting elements (8) during the recording time.

16. Apparatus according to Claim 12, having receiving optics for imaging the objects, characterized in that it is designed in such a way that the receiving optics (7) or components of the receiving optics are moved by adjusting elements (9).

17. Apparatus according to Claim 12, characterized in that it is designed in such a way that transmitting optics (10) arranged downstream of the light source (2), or components of the transmitting optics, are moved by adjusting elements (11).

18. Apparatus according to Claim 15 or 16, characterized in that it is designed in such a way that the adjusting elements (9, 11) cause defocusing of the transmitting optics (10) or receiving optics (7) during the recording time.

19. Apparatus according to Claim 12, characterized in that it is designed in such a way that the sensitivity of the image detector (3) is changed during the recording time.

20. Apparatus according to Claim 12, characterized in that a laser or at least one incoherent light source is provided to illuminate the objects.

21. Apparatus according to Claim 12, characterized in that the illuminated measuring space in which the objects are moving comprises a light plate.

22. Apparatus for visualizing directional and velocity information on object tracks, and also for implementing the procedure according to one or more of Claims 1 to 11, having at least one image detector (3, 28, 53, 63, 77, 90, 99), on which the object tracks are produced by imaging moving objects over a finite recording time, the apparatus being designed in such a way that in operation the sensitivity of the image detector is influenced in such a manner that the object tracks thereby have the form of an arrow or vector.

## Revendications

1. Procédé pour visualiser des informations de direction et de vitesse qui sont obtenues par la projection d'objets en mouvement sur un détecteur d'images avec une durée d'enregistrement finie,
**caractérisé** en ce que, pendant la durée d'enregistrement, au moins un des paramètres de traitement des composants optiques du système de projection est modifié de telle sorte que la largeur de la trace d'objet obtenue connaît une modification telle qu'elle prend la forme d'une flèche ou encore d'un vecteur.

2. Procédé selon la revendication 1, les objets étants éclairés pendant la durée d'enregistrement, **caractérisé** en ce que la modification des paramètres de traitement consiste en une modification de la puissance d'éclairage.

3. Procédé selon une des revendications précédentes, **caractérisé** en ce que la puissance de la lumière reçue par le détecteur d'images, lumière qui part des objets ou est réfléchie, est modifiée entre l'objet et le détecteur d'images pendant la durée d'enregistrement.

4. Procédé selon une des revendications précédentes, **caractérisé** en ce que le détecteur d'images est déplacé par des éléments de réglage pendant la durée d'enregistrement.

5. Procédé selon une des revendications précédentes, **caractérisé** en ce qu'une unité optique de réception disposée devant le détecteur d'images, ou des composants de l'unité optique de réception, sont déplacés par des éléments de réglage pendant la durée d'enregistrement.

6. Procédé selon une des revendications précédentes, **caractérisé** en ce qu'une unité optique d'émission disposée après une source lumineuse pour éclairer les objets, ou des composants de l'unité optique d'émission, sont déplacés par des éléments de réglage pendant la durée d'enregistrement.

7. Procédé selon une des revendications précédentes, **caractérisé** en ce que la sensibilité du détecteur d'images est modifiée pendant la durée d'enregistrement.

8. Procédé selon une des revendications précédentes, **caractérisé** en ce que l'unité optique d'émission ou l'unité optique de réception est défocalisée pendant la durée d'enregistrement.

9. Procédé selon une des revendications précédentes, **caractérisé** en ce que les objets en mouvement sont des objets dispersant ou émettant de la lumière, tels que des molécules ou de petites particules.

10. Procédé selon une des revendications précédentes, les objets étant éclairés, **caractérisé** en ce qu'on utilise pour l'éclairage des objets au moins un laser ou au moins une source lumineuse incohérente.

11. Procédé selon une des revendications précédentes, les objets étant éclairés, **caractérisé** en ce que la chambre de mesure éclairée dans laquelle se trouvent les objets est formée par un disque lumineux, le rayon d'une source lumineuse étant à cet effet élargi dans un plan, ou bien balayant un plan par des éléments déflecteurs et formant une coupe de lumière.

12. Dispositif pour visualiser des informations de direction et de vitesse sur des traces d'objets, pour la mise en oeuvre du procédé selon une des revendications précédentes, constitué de
- une ou plusieurs sources lumineuses (2, 20, 45, 55, 70, 80) pour éclairer une chambre de mesure dans laquelle se déplacent des objets (1, 23, 45, 57, 72, 83, 95) et/ou
- un ou plusieurs composants (4, 6, 21, 41, 61, 71, 82) dans le trajet des rayons afin de modifier ce trajet ou le flux lumineux, et
- au moins un détecteur d'images (3, 28, 53, 63, 77, 90, 99), sur lequel les traces d'objet apparaissent par une projection d'objets en mouvement avec une durée d'enregistrement finie,
le dispositif étant conçu de telle sorte que, en fonctionnement, au moins un de ces éléments est influencé de telle sorte que les traces d'objet présentent ainsi la forme d'une flèche ou encore d'un vecteur.

13. Dispositif selon la revendication 12, **caractérisé** en ce que des composants (4) mécaniques, électriques, optiques, électro-optiques, acousto-optiques ou électroniques sont prévus pour modifier la puissance d'éclairage, pendant la durée d'enregistrement.

14. Dispositif selon la revendication 12, **caractérisé** en ce qu'il est conçu de telle sorte que, pendant la durée d'enregistrement, la puissance de la lumière reçue par le ou les détecteurs d'images (3), lumière qui part des objets (1), est modifiée par des composants (6) mécaniques, électriques, optiques, électro-optiques, acousto-optiques ou électroniques, installés dans le trajet des rayons entre le lieu de mesure (5) et le détecteur d'images (3).

15. Dispositif selon la revendication 12, **caractérisé** en ce qu'il est conçu de telle sorte que le détecteur d'images (3) est déplacé par des éléments de réglage (8) pendant la durée d'enregistrement.

16. Dispositif selon la revendication 12, avec une unité optique de réception pour la projection des objets, **caractérisé** en ce qu'il est conçu de telle sorte que l'unité optique de réception (7) ou des composants de l'unité optique de réception sont déplacés par des éléments de réglage (9).

17. Dispositif selon la revendication 12, **caractérisé** en ce qu'il est conçu de telle sorte qu'une unité optique d'émission (10) disposée après la source lumineuse (2), ou des composants de l'unité optique d'émission, sont déplacés par des éléments de réglage (11).

18. Dispositif selon la revendication 15 ou 16, **caractérisé** en ce qu'il est conçu de telle sorte que les éléments de réglage (9, 11) effectuent une défocalisation de l'unité optique d'émission (10) ou de l'unité optique de réception (7) pendant la durée d'enregistrement.

19. Dispositif selon la revendication 12, **caractérisé** en ce qu'il est conçu de telle sorte que la sensibilité du détecteur d'images (3) est modifiée pendant la durée d'enregistrement.

20. Dispositif selon la revendication 12, **caractérisé** en ce qu'un laser, ou au moins une source lumineuse incohérente, est prévu pour l'éclairage des objets.

21. Dispositif selon la revendication 12, **caractérisé** en ce que la chambre de mesure éclairée dans laquelle se déplacent les objets est formée par un disque lumineux.

22. Dispositif pour visualiser des informations de direction et de vitesse sur des traces d'objets, pour la mise en oeuvre du procédé selon une ou plusieurs des revendications 1 à 11, avec au moins un détecteur d'images (3, 28, 53, 63, 77, 90, 99), sur lequel les traces d'objet apparaissent par une projection d'objets en mouvement avec une durée d'enregistrement finie, le dispositif étant conçu de telle sorte que, en fonctionnement, la sensibilité du détecteur d'images est influencée de telle sorte que les traces d'objet présentent ainsi la forme d'une flèche ou encore d'un vecteur.
